# EUROPEAN PATENT SPECIFICATION

(11) **EP 1 505 102 B1**
(45) Date of publication and mention of the grant of the patent: **27.06.2007**
(21) Application number: 03425544.8
(22) Date of filing: 07.08.2003
(51) Int. Cl.: C08G 83/00, C08L 39/06, C09D 133/06, C09D 201/00, C08J 7/04

(54) **A process for preparing hydrophilic coatings and products thus obtained**
Verfahren zur Herstellung von hydrophilen Beschichtungen sowie daraus erhaltene Produkte
Procédé de préparation d'un revêtement hydrophile et produits a base de cette préparation

(43) Date of publication of application: 09.02.2005
(73) Proprietor: Bioservice S.p.A., 46025 Poggio Rusco (MN) (IT)
(72) Inventor: Berti, Corrado, 48022 Lugo (Ravenna) (IT); Lorenzetti, Cesare, 63013 Grottammare (Ascoli Piceno) (IT); Grandi, Giuseppe, 41038 San Felice sul Panaro (Modena) (IT)
(74) Representative: Gislon, Gabriele

(56) References cited:
- WO-A-02/10189
- US-A- 5 005 287
- US-A- 5 418 301
- DATABASE WPI Section Ch, Week 200266 Derwent Publications Ltd., London, GB; Class A60, AN 2002-612237 XP002277063 & JP 2002 188076 A (NIPPON SHOKUBAI CO LTD) 5 July 2002 (2002-07-05)

## Description

The present invention relates to a process of preparing a hydrophilic coating of plastic material substrates and to the products provided with said coating. The invention also relates to the thus obtained coating.

More specifically, the invention relates to the preparation of a coating on substrates that are biomedical devices to impart them low friction coefficient properties. The hydrophilic coating of the invention may be applied to a wide range of devices to obtain a low friction coefficient. Examples of devices that may be provided with coatings with a low friction coefficient are medical and biomedical devices such as catheters, endoscopes and laryngoscopes, probes for feeding, for drainage or for endotracheal use, tubes for extracorporeal blood circulation and different paramedical devices such as protections to place on lesions of various types, condoms, razors, etc..

Devices provided with a hydrophilic coating have been known for some time in the art.

The application of hydrophilic coatings to devices for biomedical use has in fact received considerable attention in order to increase biocompatibility of the device to which the coating is applied. A particularly important property of these coatings is the low friction coefficient that can be obtained with their application. This makes it possible to minimize discomfort related to the insertion of devices such as catheters and probes and lesions that occur during insertion or removal of the probe.

As described in the patent literature the methods of producing hydrophilic coatings can be divided into approximately 5 different methods:
- simple coating with a hydrophilic polymer
- mixing or preparation of hydrophilic polymer compounds
- forming "interpenetrating polymer networks"
- coating with hydrophilic polymers that can react chemically
- hydrophilic polymers "grafted" to the surface to be coated

The first four methods of coating have various disadvantages that limit the duration of the coating or make its preparation particularly complex.

The present invention relates to a process to chemically bond the polymer to the substrate to which the coating is applied, the inventors being of the opinion that this is the method that guarantees the best results in terms of quality of the coating (friction coefficient) and its duration.

Various methods have been used to chemically bond a hydrophilic polymer to a substrate.

In WO 89/09246 peroxides and activated photoinitiators are used to give radicals by heating and by UV radiation respectively.

WO 98/58990 proposes a PVP coating in two layers with different degrees of cross-linking obtained by a polymeric photoinitiator and UV radiation.

GB 1600963 proposes the use of a solution of PVP and diisocyanate in various solvents (ethyl lactate, methyl ethyl ketone, caprolactone), to be applied to a polyurethane or PVP tube previously immersed in methylene chloride to obtain a certain degree of swelling. It is not clear if there are direct bonds with the PVP or merely the formation of an interpenetrating polymer network.

In patent US 4,373,009 a diisocyanate layer is first prepared, which is then covered with a hydrophilic layer in polyvinylpyrrolidone with polyacrylamide and cured at high temperatures.

In patent US 4,585,666 the technology described is proposed as a development of the 1981 patent GB 1 600 963. In particular, the coating is produced using PVP and oligomer isocyanates of the DESMODUR® class by BAYER, composed of hexamethyl diisocyanate derivates.

Patent US 5,005,287 relates to a technique to prepare a hydrophilic layer with a lubricating effect on the surface of a razor. The hydrophilic layer is prepared by mixing N-vinyl pyrrolidone, polyvinylpyrrolidone and various other hydrosoluble polymers in various dosages in the presence of a radical photoinitiator.

The processes above described have some drawbacks; the high temperature required for cross-linking in some of them may damage the plastic substrate, the cross-linking times are relatively long and the grip of the coating on the substrate is not always constant through time.

There is therefore the necessity of improving the currently known technique of coating by chemical bonding.

It is an aim of the present invention to solve the aforesaid problems and to provide a fast, reliable and inexpensive process for producing a hydrophilic polymer coating with a low friction coefficient and which provides a coating with high and constant properties of low friction coefficient.

This aim is reached by means of the present invention, which relates to a process for the preparation of a hydrophilic coating for a substrate in plastic material, characterized in that it comprises the steps of mixing one or more hydrophilic polymers selected from polymers and copolymers of N-vinyl lactams and hydrophilic polyurethanes with one or more dendritic polymers and of cross-linking said hydrophilic polymer to said substrate by means of said dendritic polymer(s).

According to a preferred aspect of the invention the hydrophilic polymer is a polyvinylpyrrolidone and the polymer having dendritic structure is a polyester.

According to one aspect of the invention the dendritic polymer is made to react with maleic anhydride to obtain functional groups that improve grafting of the hydrophilic polymer to the substrate.

A further object of the invention is the coating obtained according to the process hereinbefore, characterized in that it comprises a coating hydrophilic polymer and a dendritic polymer grafting the coating polymer to the device to be coated.

The invention also relates to biomedical devices coated with the hydrophilic layer as above.

The invention has many advantages in respect of prior art processes. The use of the dendritic polymer as the cross-linking units has in fact proved to offer numerous advantages, such as a reduction of the cross-linking times, an improved adhesion to the substrate and a lower friction coefficient. Moreover, the process to prepare the coating is easier than the of prior art ones.

As above mentioned, the present invention relates to the preparation of a hydrophilic coating layer for substrates in plastic material, said coating layer containing polymers and copolymers of N-vinyl lactams, in particular PVP and/or hydrophilic polyurethanes, and a dendritic polymer, functionalized or non-functionalized, that can be partially or totally mixed with the PVP, in order to improve the quality of the coating in terms of lubricity, duration and ease of preparation.

The plastic material of the substrate is the plastic normally used in known biomedical devices or in the devices mentioned above; as well as to polyurethane, the hydrophilic layer according to the invention may in fact conveniently be applied to many polymeric substrates such as polyethylene, polypropylene, polyesters, silicones, polyamides, elastomers based on polyester and polyamide, polyvinyl chloride, natural rubber, elastomers based on polyolefins.

In the case of substrates with no functional groups or only slightly functionalized substrates such as polyolefins or polyvinyl chloride, these may be pre-treated with a primer or another treatment per se known in the art (corona effect, swelling, etc.) to make the substrate more receptive to the coating layer and to facilitate cross-linking between the substrate and the coating by means of the dendritic polymer.

The hydrophilic polymers to use for the coating according to the invention are selected from polyvinylpyrrolidone and polymers and copolymers of N-vinyl lactams, and hydrophilic polyurethanes; preferred hydrophilic polyurethanes are derivatives of aliphatic or aromatic diisocyanates and polyethylene oxide or polyethylene glycol such as the product Tecogel ® by Surmodics.

Dendritic polymers suitable for use as grafting units of the hydrophilic polymer to the substrate are all those that can be mixed at least partially with said hydrophilic polymer, where with the wording "mixed at least partially" it is intended that after mixing and recovery by physical separation of the unmixed portion of dendritic polymer, at least 20% of the dendritic polymer is incorporated in the hydrophilic coating polymer.

Dendritic polymers suitable for the purpose are polyesters, polyamidoamines (PAMAM), polyamines, polyethers and those based on polyurethane. The wording "dendritic polymers" is considered to include all those having a dendritic structure, irrespective of their synthesis method, including hyperbranched polymers obtained by polycondensation of ABx monomers.

Preferred dendritic polymers are those polyesters and in particular Boltorn, a saturated polyester by Perstorp Polyols, and its derivates; these polymers are normally used in the preparation of photocrosslinkable paints.

The amount of dendritic polymer to be mixed with the hydrophilic polymer is included in the range between 2% and 80% in weight of the weight of the dry hydrophilic polymer, that is between 2 and 80 parts of dendritic polymer for each part of hydrophilic polymer. Preferred ranges are between 15% and 50% and more preferably between 20% and 40%. For polyvinylpyrrolidone the preferred range is between 20% and 40% in weight and more preferably around 25-30% in weight.

The dendritic polymer can be functionalized by reaction with maleic anhydride or acrylic acid, methacrylic acid, their anhydrides and chlorides, e.g. as disclosed in W002/22700. The object of functionalization is to provide unsaturations on the terminal groups of the dendritic structure of the polymer. This type of structure is particularly reactive in the presence of UV radiation, making it possible to obtain together with the PVP, or another hydrophilic polymer, persistent hydrophilic coatings in considerably short times; in particular, it was found that to cross-link polyvinylpyrrolidone and dendritic polymer functionalized with maleic anhydride on the polyurethane substrate only 30 minutes were required and this time could be further reduced by increasing the power of the lamps used. A suitable lamp power is around 20W.

Surprisingly, it was noted that the dendritic polymer not functionalized with maleic anhydride also makes it possible to considerably reduce the times for cross-linking and formation of the hydrophilic layer in respect of prior art, as can be seen from the results of examples 4 and 5.

The invention also provides for the presence of at least one photoinitiator. Suitable photoinitiators are, for example, benzophenone, 1-hydroxycyclohexyl phenyl ketone, 4-(2-hydroxyethoxy)phenyl, 2-hydroxy-2-methylpropyl ketone and their mixtures; suitable commercial products are Esacure (Lamberti) and Irgacure (BASF). The amount of photoinitiator by weight with respect to the weight of the dry hydrophilic polymer is within the range from 0.3 to 8.0% by weight of the dry hydrophilic polymer, that is from 0.3 to 8.0 parts by weight for 100 parts of dry hydrophilic polymer.

In the absence of dendritic polymer and photoinitiator the time required for an acceptable degree of cross-linking and adhesion of the PVP to the substrate are excessive and impossible to industrial apply on a large scale.

The process according to the invention also includes the possibility of incorporating in the hydrophilic layer one or more agents capable of acting against bacterial growth, such as particles of elemental silver, silver salts, antibiotics, methylene blue, chelating compounds such as aminocarboxylic acids (for example EDTA), PVP compounds containing iodine (Povidone iodine), chlorhexydine salts, triclosan, quaternary ammonia salts such as benzalkonium chloride and anti-inflammatory agents such as betaine.

This incorporation occurs preferably by simply adding the compounds, or their mixture, to the solutions of the polymers that will form the coating of the invention. The added amount is from 2.0% to 45% by weight of the weight of the dry hydrophilic polymer, that is 2 to 45 parts by weight for 100 parts of dry hydrophilic polymer.

One or more polymers, preferably selected from carboxymethylcellulose, hydroxyethylcellulose, polyethylenglycol, polyacrylic acid, polymethacrylic acid, polyvinyl alcohol, polyvinylbutyral, polyacrylamide, cellulose acetate propionate, can be added to the above described mixture.

The invention shall now be disclosed in greater detail with reference to the following non-limiting examples.

Materials and methods:
Polyvinylpyrrolidone PVP K90 (Basf)
Absolute ethanol (Fluka); Acetone 99% (Riedel de Haen)
Photoinitiators Esacure KIP 150 and Esacure KIP (Lamberti)
Boltorn H30 and Boltorn H40 (Perstorp Polyols)
Sodium Methoxide (Aldrich); Maleic Anhydride (Aldrich)

### Example 1

### Preparation of dendritic polyester functionalized with maleic anhydride.

15.28 grams of maleic anhydride and 1 ml of a solution (30% by weight) of sodium methoxide in methanol were added to 25 grams of Boltorn H30 dissolved in 80 ml of acetone; the mixture was left under stirring at ambient temperature for 2 days. The solution was subsequently placed in a rotavapor in order to recover the polymer functionalized with acid groups and unsaturations deriving from maleic anhydride. The product obtained, a highly viscous liquid obtained in this way, was used in a mixture with PVP to produce hydrophilic coatings.

### Example 2

### Preparation of a probe having a hydrophilic layer with functionalized dendritic polymers, without photoinitiator.

One gram of PVP was dissolved in 30 ml of absolute ethanol; to 7 ml of this solution 0.046 g of Boltorn H30 functionalized according to example 1 (20% in mass in respect of the PVP) and 3 ml of acetone were added. The solution thus obtained is opalescent.

An Estane 58277 polyurethane probe (Goodrich) was immersed in the above solution for 2 minutes, then dried with hot air and exposed for 30 minutes to the light of a UV lamp (wavelength between 200 and 300 nm) with a power of 20 W. After being wet with water the probe had an extremely low friction coefficient and excellent adhesion of the hydrophilic layer to the tube.

### Example 3

### Preparation of a probe having probe having a hydrophilic layer with functionalized dendritic polymer and photoinitiator.

One gram of PVP was dissolved in 30 ml of absolute ethanol; to 7 ml of this solution 0.046 g of Boltorn H30 functionalized according to example 1 (20% in mass in respect of the PVP), 0.007 g of ESACURE KIP 150 and 3 ml of acetone were added.

An Estane 58277 polyurethane probe (Goodrich) was immersed in the above solution for 2 minutes, then dried with hot air and exposed for 15 minutes to the light of a UV lamp (wavelength between 200 and 300 nm) with a power of 20 W.

After being wet with water the probe had an extremely low friction coefficient and excellent adhesion of the hydrophilic layer to the tube.

### Example 4

### Preparation of a probe having a hydrophilic layer with non-functionalized dendritic polymer, with photoinitiator.

One gram of PVP was dissolved in 30 ml of absolute ethanol; to 7 ml of this solution 0.060 g of Boltorn H30 (26% in mass in respect of the PVP), 0.007 g of photoinitiator ESACURE KIP 150 (3% in mass in respect of the PVP) and 3 ml of acetone were added.

An Estane 58277 polyurethane probe (Goodrich) was immersed in the above solution for 2 minutes, then dried with hot air and exposed for 15 minutes to the light of a UV lamp (wavelength between 200 and 300 nm) with a power of 20 W.

After being wet with water the probe had an extremely low friction coefficient and excellent adhesion of the hydrophilic layer to the tube.

### Example 5

### Preparation of a probe having a hydrophilic layer with non-functionalized dendritic polymer, with photoinitiator.

One gram of PVP was dissolved in 30 ml of absolute ethanol; to 7 ml of this solution 0.060 g of Boltorn H40 (26% in mass in respect of the PVP), 0.007 g of photoinitiator ESACURE KIP 150 (3% in mass in respect of the PVP) and 3 ml of acetone were added.

An Estane 58277 polyurethane probe (Goodrich) was immersed in the above solution for 2 minutes, then dried with hot air and exposed for 15 minutes to the light of a UV lamp (wavelength between 200 and 300 nm) with a power of 20 W.

After being wet with water the probe had an extremely low friction coefficient and excellent adhesion of the hydrophilic layer to the tube. There were no significant differences in respect of the probe prepared according to example 4, notwithstanding the fact that the dendritic polymer was not functionalized.

### Example 6 (for comparison).

### Preparation of a probe having a hydrophilic layer composed of PVP without dendritic polymers.

One gram of PVP was dissolved in 30 ml of absolute ethanol; to 7 ml of this solution 0.007 g of photoinitiator ESACURE KIP 150 (3% in mass in respect of the PVP) and 3 ml of acetone were added.

An Estane 58277 polyurethane probe (Goodrich) was immersed in the above solution for 2 minutes, then dried with hot air and exposed for 15 minutes to the light of a UV lamp (wavelength between 200 and 300 nm) with a power of 20 W. After being wet with water the probe partially loses its low friction coefficient and adhesion of the hydrophilic layer is insufficient.

## Claims

1. A process of preparing a hydrophilic coating for a substrate in plastic material, comprising the step of preparing a mixture containing one or more hydrophilic polymers selected from polymers and copolymers of N-vinyl lactams and hydrophilic polyurethanes **characterized in** comprising the step of preparing said mixture with one or more dendritic polymers and of cross-linking said hydrophilic polymer onto said substrate by means of said dendritic polymer(s).

2. A process according to claim 1, wherein said cross-linking step is carried out under UV radiation.

3. A process according to claim 2, wherein said mixture contains a photoinitiator.

4. A process according to one of the previous claims, also comprising the step of functionalizing said dendritic polymer with unsaturations on the terminal groups of its chain.

5. A process according to one of the previous claims, also comprising the step of adding antibacterial and/or anti-inflammatory agents to said mixture.

6. A process according to one of the previous claims, wherein are mixed from 2 to 80 parts by weight of said dendritic polymer for 100 parts of hydrophilic polymer.

7. A process according to one of the previous claims, wherein said dendritic polymer is selected from polyesters and polyurethanes.

8. A process according to claim 7, wherein said hydrophilic polymer is selected from polyvinylpyrrolidone and hydrophilic polyurethanes.

9. A hydrophilic coating as obtainable according to one of the previous claims and containing a hydrophilic polymer and a dendritic polymer.

10. A medical or paramedical device comprising a hydrophilic coating as obtainable according to one of the previous claims and containing a hydrophilic polymer and a dendritic polymer.

## Patentansprüche

1. Verfahren zur Herstellung einer hydrophilen Beschichtung für ein Substrat aus Kunststoffmaterial, umfassend den Schritt des Herstellens einer Mischung, enthaltend ein oder mehrere hydrophile Polymere, die ausgewählt sind aus Polymeren und Copolymeren von N-Vinyllactamen und hydrophilen Polyurethanen, **dadurch gekennzeichnet, dass** es den Schritt des Herstellens der Mischung mit einem oder mehreren dendritischen Polymeren und des Vernetzens des hydrophilen Polymers auf dem Substrat mit Hilfe der dendritischen Polymere umfasst.

2. Verfahren nach Anspruch 1, wobei der Vernetzungsschritt unter UV-Strahlung durchgeführt wird.

3. Verfahren nach Anspruch 2, wobei die Mischung einen Photoinitiator enthält.

4. Verfahren nach einem der vorstehenden Ansprüche, wobei das Verfahren auch den Schritt des Funktionalisierens des dendritischen Polymers mit ungesättigten Stellen an den endständigen Gruppen seiner Kette umfasst.

5. Verfahren nach einem der vorstehenden Ansprüche, wobei das Verfahren auch den Schritt der Zugabe antibakterieller und/oder antiinflammatorischer Mittel zu der Mischung umfasst.

6. Verfahren nach einem der vorstehenden Ansprüche, wobei 2 bis 80 Gewichtsteile des dendritischen Polymers auf 100 Gewichtsteile des hydrophilen Polymers gemischt werden.

7. Verfahren nach einem der vorstehenden Ansprüche, wobei das dendritische Polymer ausgewählt ist aus Polyestern und Polyurethanen.

8. Verfahren nach Anspruch 7, wobei das hydrophile Polymer ausgewählt ist aus Polyvinylpyrrolidon und hydrophilen Polyurethanen.

9. Hydrophile Beschichtung, die nach einem der vorstehenden Ansprüche erhältlich ist und ein hydrophiles Polymer und ein dendritisches Polymer enthält.

10. Medizinische oder paramedizinische Vorrichtung, umfassend eine hydrophile Beschichtung, die nach einem der vorstehenden Ansprüche erhältlich ist und ein hydrophiles Polymer und ein dendritisches Polymer enthält.

## Revendications

1. Procédé de préparation d'un revêtement hydrophile pour un substrat en matière plastique, comprenant l'étape de préparation d'un mélange contenant un ou plusieurs polymère(s) hydrophile(s) choisi(s) parmi des polymères et des copolymères de N-vinyl lactames et de polyuréthanes hydrophiles, **caractérisé en ce qu'**il comprend l'étape de préparation dudit mélange avec un ou plusieurs polymère(s) dendritique(s), et de réticulation dudit polymère hydrophile sur ledit substrat au moyen dudit/desdits polymère(s) dendritique(s).

2. Procédé selon la revendication 1, dans lequel ladite étape de réticulation est menée sous rayonnement UV.

3. Procédé selon la revendication 2, dans lequel ledit mélange contient un photo-initiateur.

4. Procédé selon l'une quelconque des revendications précédentes, comprenant en outre l'étape de fonctionnalisation dudit polymère dendritique avec des insaturations sur les groupes terminaux de sa chaîne.

5. Procédé selon l'une quelconque des revendications précédentes, comprenant en outre l'étape d'addition d'agents antibactériens et/ou anti-inflammatoires audit mélange.

6. Procédé selon l'une quelconque des revendications précédentes, dans lequel sont mélangées 2 à 80 parties en poids dudit polymère dendritique pour 100 parties de polymère hydrophile.

7. Procédé selon l'une quelconque des revendications précédentes, dans lequel ledit polymère dendritique est choisi parmi des polyesters et des polyuréthanes.

8. Procédé selon la revendication 7, dans lequel ledit polymère hydrophile est choisi parmi la polyvinylpyrrolidone et des polyuréthanes hydrophiles.

9. Revêtement hydrophile pouvant être obtenu selon l'une quelconque des revendications précédentes et contenant un polymère hydrophile et un polymère dendritique.

10. Dispositif médical ou paramédical comprenant un revêtement hydrophile pouvant être obtenu selon l'une quelconque des revendications précédentes et contenant un polymère hydrophile et un polymère dendritique.
